# FASCICULE DE BREVET EUROPEEN

(11) **EP 3 697 674 B1**
(45) Date de publication et mention de la délivrance du brevet: **13.12.2023**
(21) Numéro de dépôt: 18786343.6
(22) Date de dépôt: 16.10.2018
(51) Int. Cl.: B62D 25/02, B62D 25/08, B62D 25/16, B60R 11/02

(54) **PASSAGE DE ROUE DE VÉHICULE AUTOMOBILE SUPPORTANT UN MODULE DE HAUT-PARLEUR**
KRAFTFAHRZEUGRADKASTEN MIT LAUTSPRECHERMODUL
MOTOR VEHICLE WHEEL HOUSING CARRYING A SPEAKER MODULE

(30) Priorité: 17.10.2017 FR 1759710
(43) Date de publication de la demande: 26.08.2020
(73) Titulaire: Renault s.a.s, 92100 Boulogne Billancourt (FR)
(72) Inventeur: LORENZO-PEREZ, Cesar, 34003 Palencia (ES); PEREZ-RECIO, David, 47011 Valladolid (ES)
(74) Mandataire: Renault Group
(86) Numéro de dépôt international: PCT/EP2018/078280
(87) Numéro de publication internationale: WO 2019/076918

(56) Documents cités:
- EP-A1- 1 878 640
- EP-A2- 1 288 114
- WO-A1-2015/087991
- WO-A1-2018/050718
- JP-U- S55 176 689
- US-A- 4 877 105
- US-A1- 2007 138 837

## Description

La présente invention porte sur un passage de roue interne de véhicule automobile destiné à recevoir un module de haut-parleur. L'invention porte aussi sur une caisse comprenant un tel passage de roue interne. L'invention porte également sur un ensemble comprenant un passage de roue interne ou une caisse et un module de haut-parleur fixé sur le passage de roue interne ou sur la caisse. L'invention porte enfin sur un véhicule automobile comprenant une telle caisse ou un tel passage de roue interne.

Un véhicule automobile est généralement équipé d'un module de haut-parleur, par exemple un caisson de basses. Un tel caisson de basses est implanté en général au sein du plancher du véhicule automobile, par exemple au sein du plancher arrière. Seulement l'évolution de la réglementation en termes de dépollution des moteurs à combustion interne engendre des systèmes de traitement des polluants complexes et encombrants. Le volume disponible au sein du plancher arrière est alors insuffisant pour recevoir un module de haut-parleur.

Le document US 4 877 105 A divulgue un passage de roue selon le préambule de la revendication indépendante 1 en ce qu'il comprend un passage de roue interne d'un véhicule automobile, le passage de roue interne comprenant une surface de fixation destinée à assurer au moins en partie la fixation d'un module de haut-parleur.

Le but de l'invention est de permettre l'implantation d'un module de haut-parleur remédiant aux inconvénients ci-dessus. En particulier, l'invention propose une caisse supportant un module de haut-parleur de manière simple et fiable, et étant peu onéreuse à produire.

Pour atteindre cet objectif l'invention porte sur un passage de roue interne, notamment un passage de roue interne arrière, d'un véhicule automobile, le passage de roue interne comprenant une surface de fixation, notamment une surface de fixation plane ou sensiblement plane, destinée à assurer au moins en partie la fixation d'un module de haut-parleur, notamment un caisson de basses. Le passage de roue interne comprend une ouverture ménagée dans la surface de fixation, notamment une ouverture en forme de trou oblong centrée ou sensiblement centrée dans la surface de fixation.

L'invention porte encore sur une caisse comprenant un passage de roue externe, un renfort inférieur arrière de custode et un passage de roue interne tel que défini précédemment, la caisse comprenant des premiers moyens de fixation au passage de roue interne et/ou au renfort inférieur arrière de custode et/ou au passage de roue externe destinés à assurer la fixation d'un module de haut-parleur sur la caisse.

La caisse peut comprendre un renfort de la surface de fixation, le renfort étant fixé au passage de roue interne et au passage de roue externe par des deuxièmes moyens de fixation, notamment un renfort fixé du côté opposé à la surface de fixation.

Les deuxièmes moyens de fixation peuvent comprendre au moins une vis et/ou au moins un rivet et/ou au moins un point ou cordon de soudure.

Le renfort de la surface de fixation peut être une tôle en acier, notamment une tôle d'épaisseur comprise entre 1 mm et 2 mm.

La caisse peut comprendre un support, le support étant fixé au renfort inférieur arrière de custode, notamment fixé par vissage au renfort inférieur arrière de custode.

Les premiers moyens de fixation peuvent comprendre au moins une vis et/ou au moins un rivet.

La caisse peut comprendre un plancher arrière doté d'un volume disponible apte à recevoir un réservoir d'urée.

L'invention porte également sur un ensemble comprenant :
- un passage de roue interne tel que défini précédemment ou une caisse telle que définie précédemment; et
- un module de haut-parleur, notamment un caisson de basses, fixé sur le passage de roue interne ou sur la caisse.

L'invention porte enfin sur un véhicule automobile comprenant une caisse telle que définie précédemment et/ou un passage de roue interne tel que défini précédemment et/ou un ensemble tel que défini précédemment.

Ces objets, caractéristiques et avantages de la présente invention seront exposés en détail dans la description suivante d'un mode de réalisation faite à titre non-limitatif en relation avec les figures jointes parmi lesquelles
La figure 1 représente une vue schématique d'un mode de réalisation d'un véhicule.
La figure 2 représente une vue éclatée partielle d'une caisse dotée d'un premier type de module de haut-parleur selon un mode de réalisation.
La figure 3 représente une vue de face partielle de la caisse dotée du premier type de module de haut-parleur selon le mode de réalisation.
La figure 4 représente une vue de face partielle d'une caisse dotée d'un deuxième type de module de haut-parleur selon le mode de réalisation.
La figure 5 représente une vue éclatée partielle de la caisse dotée du deuxième type de module de haut-parleur selon le mode de réalisation.
La figure 6 représente une vue de face partielle de la caisse dépourvue de module de haut-parleur selon le mode de réalisation.
La figure 7 représente une vue de dessous partielle de la caisse dépourvue de module de haut-parleur selon le mode de réalisation.

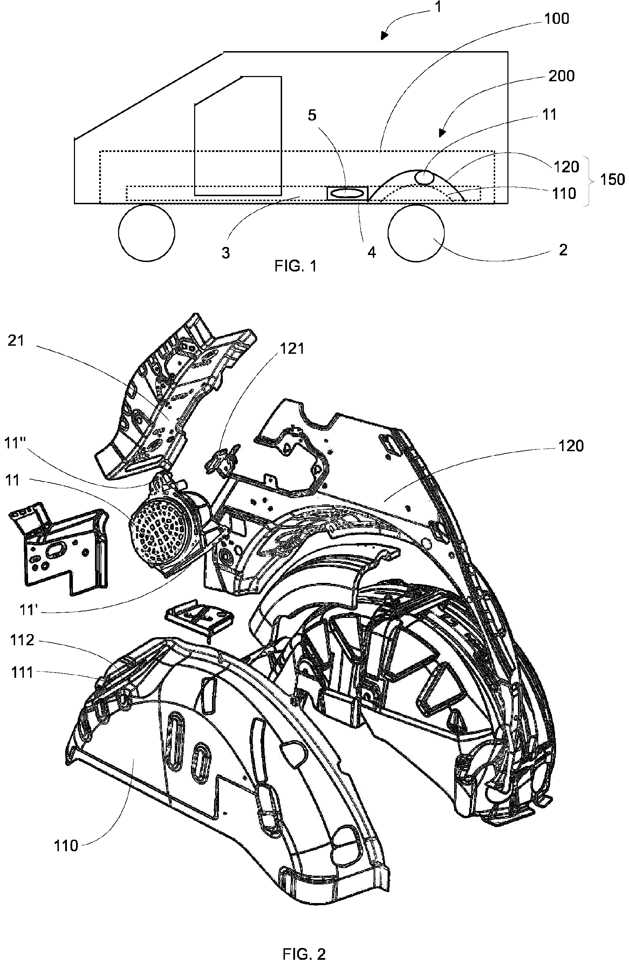

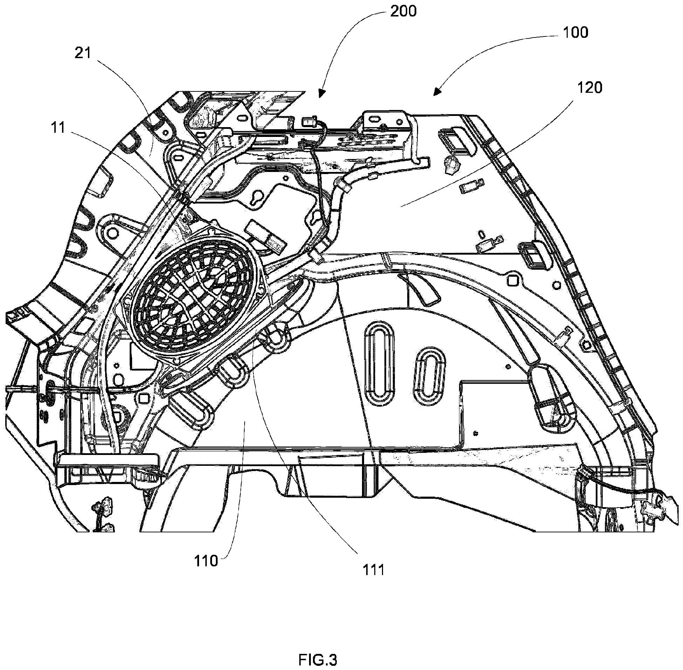

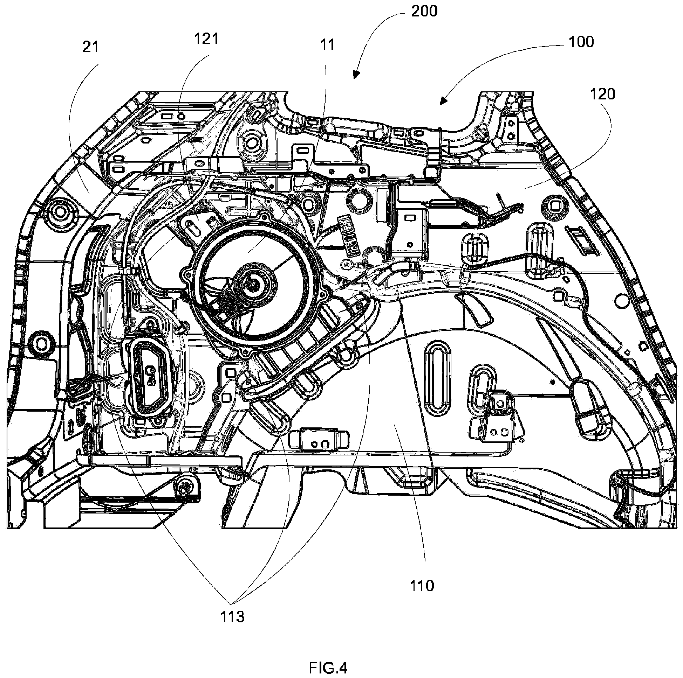

La figure 1 illustre un mode de réalisation d'un véhicule automobile 1 comprenant une caisse 100. La caisse 100 comprend généralement quatre passages de roues, à savoir deux pour les roues avant et deux pour les roues arrière 2. Dans le mode de réalisation, c'est le passage de roue arrière 150 gauche qui est utilisé. Ce passage de roue arrière 150 gauche est par conséquent illustré sur les figures 2 à 7.

Bien que la description suivante se rapporte au passage de roue arrière gauche, la solution pourrait être adoptée pour un passage de roue arrière droit.

A noter qu'un passage de roue arrière 150 comprend d'une part un passage de roue interne 110 et d'autre part un passage de roue externe 120. Ainsi, au niveau d'un passage de roue arrière 150, la caisse 100 comprend le passage de roue externe 120, le passage de roue interne 110 et un renfort inférieur arrière de custode 21. En effet, l'élément de carrosserie arrière nommé custode est généralement renforcé par le renfort inférieur arrière de custode 21.

La caisse 100 comprend en outre des premiers moyens de fixation 113 au passage de roue interne 110 et/ou au renfort inférieur arrière de custode 21 et/ou au passage de roue externe 120 destinés à assurer la fixation d'un module de haut-parleur 11 comme il est détaillé par la suite.

En outre, un ensemble 200 comprend le passage de roue interne 110 ou la caisse 100 et le module de haut-parleur 11 fixé sur le passage de roue interne 110 ou sur la caisse 100.

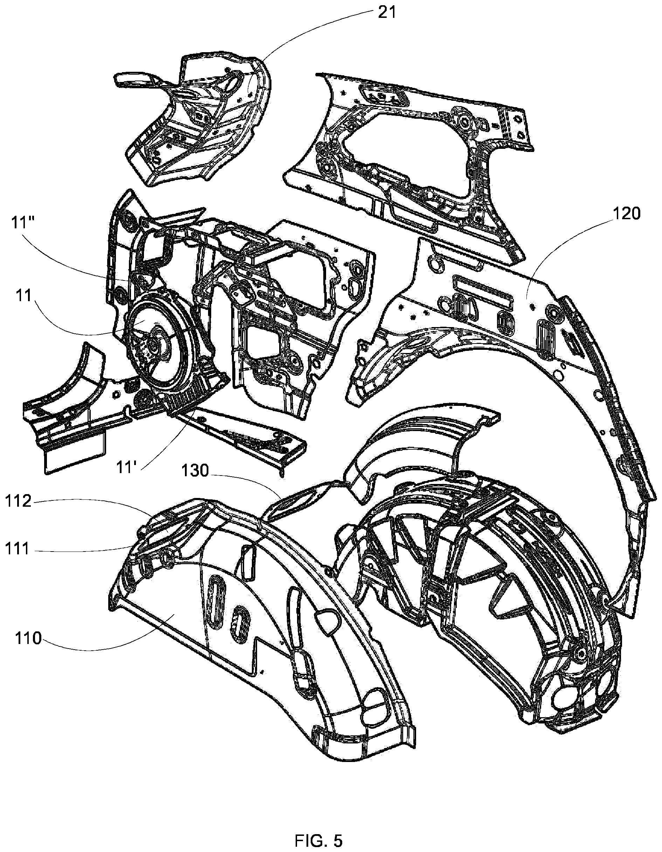

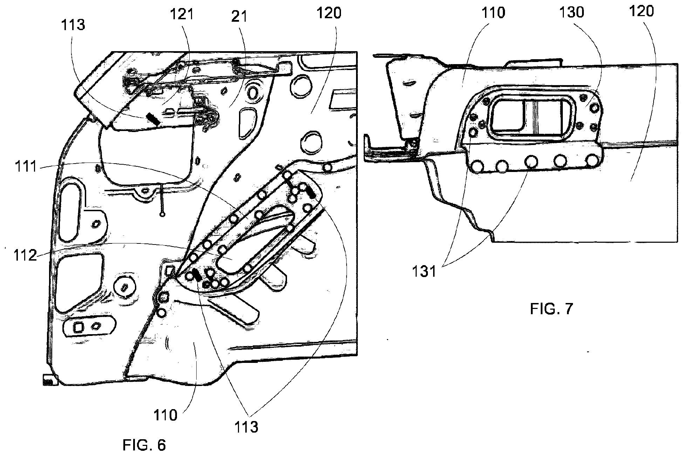

Comme illustré sur les figures 5 et 7, la caisse 100 comprend de préférence un renfort 130 d'une surface de fixation 111 du passage de roue interne 110. Ce renfort 130 est fixé avantageusement à la fois au passage de roue interne 110 et au passage de roue externe 120. Pour ce faire des deuxièmes moyens de fixation 131 sont prévus. Le renfort 130 est fixé du côté opposé à la surface de fixation 111.

Les deuxièmes moyens de fixation 131 comprennent par exemple au moins une vis et/ou au moins un rivet et/ou au moins un point ou cordon de soudure. Avantageusement, au moins deux rivets sont utilisés comme illustré sur la figure 7.

De préférence, le renfort 130 de la surface de fixation 111 est une tôle en acier, par exemple une tôle d'épaisseur comprise entre 1 mm et 2 mm, de préférence de l'ordre de 1,5 mm.

Comme évoqué ci-dessus, le passage de roue interne 110 d'un passage de roue 150 arrière du véhicule automobile 1 comprend la surface de fixation 111 destinée à assurer au moins en partie la fixation d'un module de haut-parleur 11. Un tel module haut-parleur 11 est par exemple un caisson de basses ou encore un amplificateur. De préférence, cette surface de fixation 111 est plane ou sensiblement plane. De préférence encore, comme illustré sur les figures 2, 5 et 6, une ouverture 112 est ménagée dans la surface de fixation 111, par exemple une ouverture 112 en forme de trou oblong centrée ou sensiblement centrée dans la surface de fixation 111.

Ainsi, au lieu d'encombrer un plancher 3 par l'implantation du module de haut-parleur 11, le module de haut-parleur 11 est fixé sur le passage de roue interne 110, en particulier sur la surface de fixation 111 prévue à cet effet. Le module de haut-parleur 11 est implanté radialement ou sensiblement radialement sur le passage de roue interne 110 dont la géométrie a été modifiée par la réalisation de la surface de fixation 111. L'ouverture 112 ménagée dans cette surface de fixation 111 autorise, le cas échéant, le passage d'air au sein du module de haut-parleur 11 si nécessaire. En effet, certains modules de haut-parleur, en particulier des caissons de basses, utilisent de l'air extérieur c'est pourquoi ils requièrent une arrivée d'air. Evidemment, plusieurs ouvertures peuvent convenir. Ainsi, un ou des trous circulaires, ou encore de tout autre forme, peuvent être ménagés sur la surface de fixation 111 tout en laissant une aire suffisante entre l'extérieur du ou des trous de cette ouverture 112, et le périmètre extérieur de la surface de fixation 111. En effet, une aire de contact suffisante entre une base 11' du module de haut-parleur 11 et la surface de fixation 111 est préférable, en particulier pour obtenir une certaine rigidité de montage. Des premiers moyens de fixation 113 destinés à fixer le module de haut parleur 11 sur la surface fixation 111 comprennent au moins une vis et/ou au moins un rivet. Comme illustré notamment sur la figure 6, deux vis traversent le renfort 130 et/ou le passage de roue interne 110 pour se visser dans le module de haut-parleur 11, de préférence au niveau d'une base 11' du module de haut-parleur. Alternativement, deux vis traversent la base 11' et se vissent dans le passage de roue interne 110 et/ou dans le renfort 130.

Le renfort 130, de préférence fixé sur le passage de roue interne 110 et sur le passage de roue externe 120, améliore la rigidité et par conséquent la fiabilité dans le temps de la fixation du module de haut-parleur 11 sur le passage de roue interne 110.

De préférence, la caisse 100 comprend en outre un support 121. Ce support 121 est par exemple fixé au renfort inférieur arrière de custode 21, par exemple par vissage. Une troisième vis traverse alors par exemple le support 121 et se visse dans la partie supérieure 11", ou partie haute, du module de haut-parleur 11. Alternativement, la troisième vis peut traverser le module de haut-parleur, en particulier dans sa partie supérieure 11", et venir se visser dans le support 121.

Evidemment, un nombre supérieur de vis entre le module de haut-parleur 11 et la caisse 100 peut convenir.

Ainsi, l'espace au sein de la garniture latérale du coffre, plus précisément, entre la garniture de coffre et le passage de roue interne est exploité. Il en résulte un gain de place au niveau du plancher 3. Ainsi, la caisse 100 comprend un plancher 3 arrière doté d'un volume 4 désormais disponible. Ce volume 4 peut alors être avantageusement utilisé pour recevoir des moyens de dépollution, en particulier du fait de sa proximité avec le système d'échappement en cas de moteur à combustion interne équipant le véhicule automobile 1. Ainsi le volume 4 peut par exemple accueillir l'intégralité ou une partie d'un réservoir d'urée 5.

En outre, la solution permet d'intégrer discrètement le module de haut-parleur dans le coffre arrière puisqu'il est de préférence caché par la garniture latérale du coffre. Le module de haut-parleur n'est alors pas visible, même après ouverture de la porte de coffre.

En remarque, la solution atteint donc l'objet recherché d'optimisation de l'encombrement au sein du plancher arrière et présente les avantages suivants :
- Elle est compatible avec différents modules de haut-parleurs, en particulier des modules de haut-parleurs de différentes tailles, ce qui permet de standardiser au moins en partie la production de passages de roue internes, éventuellement entre différentes gammes de véhicules, et de générer des économies de production.
- La gamme d'emboutissage des passages de roue internes peut être aisément adaptée au type de module de haut-parleur, c'est-à-dire avec réalisation de l'ouverture 112 en cas de module de haut-parleur nécessitant une arrivée d'air, et sans réalisation d'ouverture dans le cas contraire.

L'invention est particulièrement bien adaptée à un véhicule automobile doté d'un moteur à combustion interne nécessitant de moyens de dépollution au niveau de son système d'échappement. Elle porte sur un passage de roue interne. Elle porte également sur une caisse équipée d'un tel passage de roue interne. Elle porte encore sur un ensemble comprenant un passage de roue interne ou une caisse et un module de haut-parleur fixé sur le passage de roue interne ou sur la caisse. Elle porte enfin sur un véhicule automobile équipé d'un tel passage de roue interne et/ou d'une telle caisse.

Enfin, bien que la solution ait été décrite pour un passage de roue arrière 150, elle pourrait également convenir à un passage de roue avant, en particulier dans le cas d'un véhicule automobile doté d'un moteur disposé à l'arrière. En effet, un véhicule automobile dont le compartiment moteur est situé à l'arrière est davantage contraint en termes d'encombrement au niveau des passages de roues arrière et, a *fortiori*, moins contraint au niveau des passages de roues avant.

## Revendications

1. Passage de roue interne (110), notamment passage de roue interne (110) arrière, d'un véhicule automobile (1), le passage de roue interne (110) comprenant une surface de fixation (111), notamment une surface de fixation (111) plane ou sensiblement plane, destinée à assurer au moins en partie la fixation d'un module de haut-parleur (11), notamment un caisson de basses, **caractérisé en ce que** le passage de roue interne (110) comprend une ouverture (112) ménagée dans la surface de fixation (111), notamment une ouverture (112) en forme de trou oblong centrée ou sensiblement centrée dans la surface de fixation (111).

2. Caisse (100) comprenant un passage de roue externe (120), un renfort inférieur arrière de custode (21) et un passage de roue interne (110) selon la revendication précédente, **caractérisée en ce que** la caisse (100) comprend des premiers moyens de fixation (113) au passage de roue interne (110) et/ou au renfort inférieur arrière de custode (21) et/ou au passage de roue externe (120) destinés à assurer la fixation d'un module de haut-parleur (11) sur la caisse (100).

3. Caisse (100) selon la revendication précédente, **caractérisée en ce que** la caisse (100) comprend un renfort (130) de la surface de fixation (111), le renfort (130) étant fixé au passage de roue interne (110) et au passage de roue externe (120) par des deuxièmes moyens de fixation (131), notamment un renfort (130) fixé du côté opposé à la surface de fixation (111).

4. Caisse (100) selon la revendication précédente, **caractérisée en ce que** les deuxièmes moyens de fixation (131) comprennent au moins une vis et/ou au moins un rivet et/ou au moins un point ou cordon de soudure.

5. Caisse (100) selon la revendication 3 ou 4, **caractérisée en ce que** le renfort (130) de la surface de fixation (111) est une tôle en acier, notamment une tôle d'épaisseur comprise entre 1 mm et 2 mm.

6. Caisse (100) selon l'une des revendications 2 à 5, **caractérisée en ce que** la caisse (100) comprend un support (121), le support (121) étant fixé au renfort inférieur arrière de custode (21), notamment fixé par vissage au renfort inférieur arrière de custode (21).

7. Caisse (100) selon l'une des revendications 2 à 6, **caractérisée en ce que** les premiers moyens de fixation (113) comprennent au moins une vis et/ou au moins un rivet.

8. Caisse (100) selon l'une des revendications 2 à 7, **caractérisée en ce que** la caisse (100) comprend un plancher arrière (3) doté d'un volume (4) disponible apte à recevoir un réservoir d'urée (5).

9. Ensemble (200) comprenant :
- un passage de roue interne (110) selon la revendication 1 ou une caisse (100) selon l'une des revendications 2 à 8 ; et
- un module de haut-parleur (11), notamment un caisson de basses, fixé sur le passage de roue interne (110) ou sur la caisse (100).

10. Véhicule automobile (1), **caractérisé en ce qu'**il comprend une caisse (100) selon l'une des revendications 2 à 8 et/ou un passage de roue interne (110) selon la revendication 1 et/ou un ensemble (200) selon la revendication 9.

## Patentansprüche

1. Innerer Radkasten (110), insbesondere hinterer innerer Radkasten (110), eines Kraftfahrzeugs (1), wobei der innere Radkasten (110) eine Befestigungsfläche (111), insbesondere eine ebene oder im Wesentlichen ebene Befestigungsfläche (111), beinhaltet, die dazu bestimmt ist, die Befestigung eines Lautsprechermoduls (11), insbesondere eines Subwoofers, mindestens teilweise zu gewährleisten, **dadurch gekennzeichnet, dass** der innere Radkasten (110) eine in der Befestigungsfläche (111) eingerichtete Öffnung (112) beinhaltet, insbesondere eine Öffnung (112) in Form eines Langlochs, die in der Befestigungsfläche (111) zentriert oder im Wesentlichen zentriert ist.

2. Karosserie (100), die einen äußeren Radkasten (120), eine hintere untere Schutzverstärkung (21) und einen inneren Radkasten (110) nach dem vorhergehenden Anspruch beinhaltet, **dadurch gekennzeichnet, dass** die Karosserie (100) erste Mittel zur Befestigung (113) an dem inneren Radkasten (110) und/oder an der hinteren unteren Schutzverstärkung (21) und/oder an dem äußeren Radkasten (120) beinhaltet, die dazu bestimmt sind, die Befestigung eines Lautsprechermoduls (11) an der Karosserie (100) zu gewährleisten.

3. Karosserie (100) nach dem vorhergehenden Anspruch, **dadurch gekennzeichnet, dass** die Karosserie (100) eine Verstärkung (130) der Befestigungsfläche (111) beinhaltet, wobei die Verstärkung (130) durch zweite Befestigungsmittel (131) an dem inneren Radkasten (110) und an dem äußeren Radkasten (120) befestigt ist, insbesondere eine Verstärkung (130), die auf der zu der Befestigungsfläche (111) entgegengesetzten Seite befestigt ist.

4. Karosserie (100) nach dem vorhergehenden Anspruch, **dadurch gekennzeichnet, dass** die zweiten Befestigungsmittel (131) mindestens eine Schraube und/oder mindestens einen Niet und/oder mindestens einen Schweißpunkt oder eine Schweißnaht beinhalten.

5. Karosserie (100) nach Anspruch 3 oder 4, **dadurch gekennzeichnet, dass** die Verstärkung (130) der Befestigungsfläche (111) ein Stahlblech, insbesondere ein Blech mit einer Dicke zwischen 1 mm und 2 mm, ist.

6. Karosserie (100) nach einem der Ansprüche 2 bis 5, **dadurch gekennzeichnet, dass** die Karosserie (100) einen Träger (121) beinhaltet, wobei der Träger (121) an der hinteren unteren Schutzverstärkung (21) befestigt ist, insbesondere durch Verschraubung an der hinteren unteren Schutzverstärkung (21) befestigt ist.

7. Karosserie (100) nach einem der Ansprüche 2 bis 6, **dadurch gekennzeichnet, dass** die ersten Befestigungsmittel (113) mindestens eine Schraube und/oder mindestens einen Niet beinhalten.

8. Karosserie (100) nach einem der Ansprüche 2 bis 7, **dadurch gekennzeichnet, dass** die Karosserie (100) eine hintere Bodenplatte (3) beinhaltet, die mit einem verfügbaren Volumen (4) ausgestattet ist, das dazu angepasst ist, einen Harnstoffbehälter (5) aufzunehmen.

9. Anordnung (200), die Folgendes beinhaltet:
- einen inneren Radkasten (110) nach Anspruch 1 oder eine Karosserie (100) nach einem der Ansprüche 2 bis 8; und
- ein Lautsprechermodul (11), insbesondere einen Subwoofer, das/der an dem inneren Radkasten (110) oder an der Karosserie (100) befestigt ist.

10. Kraftfahrzeug (1), **dadurch gekennzeichnet, dass** es eine Karosserie (100) nach einem der Ansprüche 2 bis 8 und/oder einen inneren Radkasten (110) nach Anspruch 1 und/oder eine Anordnung (200) nach Anspruch 9 beinhaltet.

## Claims

1. Internal wheel housing (110), in particular a rear internal wheel housing (110), of a motor vehicle (1), the internal wheel housing (110) comprising a securing surface (111), in particular a flat or substantially flat securing surface (111), for at least partially securing a speaker module (11), in particular a bass box, **characterized in that** the internal wheel housing (110) comprises an opening (112) made in the securing surface (111), in particular an opening (112) in the form of an oblong hole centered or substantially centered in the securing surface (111).

2. Shell (100) comprising an external wheel housing (120), a lower rear quarter panel reinforcement (21), and an internal wheel housing (110) according to the preceding claim, **characterized in that** the shell (100) comprises first securing means (113) for securing to the internal wheel housing (110) and/or to the lower rear quarter panel reinforcement (21) and/or to the external wheel housing (120), for securing a speaker module (11) to the shell (100).

3. Shell (100) according to the preceding claim, **characterized in that** the shell (100) comprises a reinforcement (130) for the securing surface (111), the reinforcement (130) being secured to the internal wheel housing (110) and to the external wheel housing (120) by second securing means (131), in particular a reinforcement (130) secured on the side opposite to the securing surface (111).

4. Shell (100) according to the preceding claim, **characterized in that** the second securing means (131) comprise at least one screw and/or at least one rivet and/or at least one weld bead or spot.

5. Shell (100) according to Claim 3 or 4, **characterized in that** the reinforcement (130) for the securing surface (111) is a steel sheet, in particular a sheet with a thickness of between 1 mm and 2 mm.

6. Shell (100) according to one of Claims 2 to 5, **characterized in that** the shell (100) comprises a support element (121), the support element (121) being secured to the lower rear quarter panel reinforcement (21), in particular secured by screwing to the lower rear quarter panel reinforcement (21).

7. Shell (100) according to one of Claims 2 to 6, **characterized in that** the first securing means (113) comprise at least one screw and/or at least one rivet.

8. Shell (100) according to one of Claims 2 to 7, **characterized in that** the shell (100) comprises a rear floor (3) with an available volume (4) capable of receiving a urea tank (5).

9. Assembly (200) comprising:
- an internal wheel housing (110) according to Claim 1 or a shell (100) according to one of Claims 2 to 8; and
- a speaker module (11), in particular a bass box, secured to the internal wheel housing (110) or to the shell (100).

10. Motor vehicle (1), **characterized in that** it comprises a shell (100) according to one of Claims 2 to 8 and/or an internal wheel housing (110) according to Claim 1 and/or an assembly (200) according to Claim 9.
